# EUROPEAN PATENT APPLICATION

(11) **EP 2 204 531 A1**
(43) Date of publication of application: **07.07.2010**
(21) Application number: 10155970.6
(22) Date of filing: 10.10.2008
(51) Int. Cl.: F01C 1/02, F01C 11/00, F01C 21/06, F04C 18/02, F04C 23/00, F04C 29/04, F16C 19/52, F16C 35/077

(54) **Scroll device for compression or expansion**

(30) Priority: 17.10.2007 CH 16122007
(62) Divisional of application: 08840161.7
(71) Applicant: Eneftech Innovation SA, 1015 Lausanne (CH)
(72) Inventor: Kane, Malik, 1024 Ecublens (CH); Cretegny, Danilo, 1020 Renens (CH); Merminod, Antoine, 1188 Gimel (CH)
(74) Representative: Vigand, Philippe

(57) **Abstract**

A scroll device including two coupled stages (T, P) on a rotary shaft, at both ends of an intermediate electric power device (G), wherein the first stage is formed by a first pressure variation device (T) of an operating fluid, comprising a scroll case (11) containing a fixed scroll (12) and a mobile scroll (13) relatively to the case, and with admission (A) and outlet (B) ports, and **characterized in that** the second stage is a feed pump (P) which pumps the operating liquid and provides it in return.

## Description

### TECHNICAL FIELD

The present invention generally relates to a scroll device integrating a feed pump. According to another aspect, the present invention relates to a pressure variation device formed with a simple scroll device, of a compressor or expander type, or a scroll device including two coupled stages on a rotary shaft and positioned at both ends of an intermediate electric power device (motor or generator). According to another aspect, the present invention more particularly relates to a simple scroll or two-stage scroll device with which an operating fluid at high temperature and/or with a high pressure ratio may be expanded or compressed.

### TECHNICAL BACKGROUND

Scroll devices which may be alternatively used as an expander or a compressor are already known and provide a certain number of advantages in terms of operating possibilities which by far exceed those obtained for machines performing a reciprocal movement. This simple design was explained in document US No. 801,182. Such a scroll device consists of an expansion or compression chamber delimited by two spiral involutes, a fixed scroll and an orbiting scroll, placed so that they form a series of pockets with increasing sizes. The orbiting scroll is mounted on an eccentric drive shaft, which induces an orbiting movement rather than a simple rotary movement. During the expansion process, a high pressure fluid is introduced into an inlet port and discharged through an outlet port at a lower pressure by increasing the volume of the pockets and by providing mechanical power to an electric device such as a generator coupled to the orbiting scroll. In a compression process, the electric device operates as a motor for driving the orbiting scroll, and the operating fluid is then introduced and discharged at a higher pressure owing to the decreasing volume of the pockets. The use of such scroll devices has some advantages. Thus, for example, only a restricted number of mobile parts and no valve are required and the rotary movement may be completely balanced, reducing vibrations and noise. Such scroll devices are notably produced for refrigeration and air-conditioning applications.

Originally, scroll devices were used for operating with fluids and refrigerants with relatively low pressure ratios corresponding to the limitation of an installed volume ratio. The reason is that compression/expansion occurs rather gradually from chamber to chamber, so that a large scroll diameter is required for producing high compression/expansion ratios. For a given capacity, the increase in the diameter of this scroll will therefore increase the axial forces resulting from the large surface contact area and from the high pressure difference between the front and rear contact surfaces of the orbiting scroll. In order to increase the capacity of the scroll device while reducing or suppressing the unbalanced axial forces, several types of structures with dual scroll devices have been proposed. For example, a sandwich structure was proposed with orbiting scrolls facing away from each other on a common shaft in document US No. 4,192,152, or US No. 6,123,529. Although they may handle a fluid with a high pressure ratio and are capable of integrating new functions such as expansion and compression simultaneously, such dual scroll devices suffer from a number of drawbacks among which the additional weight of the orbiting scrolls and the occurrence of a large inertial load on the bearings, the consequences of which are significant limitations on the rotational speed which may be attained.

Another recurrent problem with such scroll devices is the high sensitivity to temperature changes. Compression or expansion of a fluid with a high temperature and pressure ratio is accompanied by a wide temperature distribution range resulting in deformations and displacements of scrolls. The latter reveal various clearances in radial and axial directions where pressure losses, leakages and energy dissipation occur, reducing efficiency.

A possible approach for reducing the clearances is to anticipate and provide means for adapting to the differential heat expansion. For this purpose, documents US No. 4,192,152 and WO 93/20342 disclose complex systems based on struts and on expansion bearings for compensating axial displacements in a dual scroll device without producing significant elastic forces for increasing the bearing loads.

Another approach for reducing thermal deformations is to limit the differential temperature during expansion/compression. A few scroll designs have been proposed in order to maintain the temperature relatively uniform with outer heat sources. For example, document US 2005/172622 reveals a complex heating structure integrated to the scroll case in order to simultaneously heat the expanding fluid and to then minimize the temperature difference between the fixed scroll and the orbiting scroll. However, these heating structures are prohibitively expensive to manufacture. Another example given in document US 2004/172945 which shows a type of simple winding with two expansion steps, an external heat source of which is used for heating up the operating fluid between both steps. This arrangement contributes to reducing the temperature difference between the scrolls but remains expensive to manufacture owing to the fact that the rear contact surfaces of both scrolls are made with a plurality of cooling fins which makes the scroll machining operation more difficult. Additionally, as it is a source of heat losses during expansion, the use of cooling fins decreases the operating efficiency of the device.

Document US No. 5,286,179 recommends certain thermal insulation ingenuities applied to a scroll compressor in order to prevent heating of the fluid by the walls of the compressor during its admission into the cavity of the compressor. The capacity of the compressor is increased by maintaining a higher density only if the fluid was heated up. The insulated portions are the inlet conduits for the fluid. With these ingenuities, it is by no means possible to reduce the energy losses of the fluid during its compression, nor is it possible to minimize the relative thermal deformations between the volutes (scrolls) in order to reduce their clearances.

Further, environmental issues related to check for oil and fluid (refrigerant) leaks in the atmosphere are increasingly important. With the purpose of reducing contaminants and building a long-lived robust scroll device, as this is required for home applications, and small industrial equipment, hermetically sealed scroll devices have been considered as replacement solutions for conventional open drive systems. The method consists of directly connecting the motor/generator to the scroll, and then to confine both of them in a gas-tight housing which suppresses the problems of leaks and all the maintenance required for an open drive system.

Integrating the needs and the demands for increasing the capacity of scroll devices, document JP 56-165701 shows a coaxial structure of a hermetic scroll device using two scroll expanders installed on a rotary shaft on either side of an intermediate generator. Although this is a compact solution, capable of simultaneously expanding a fluid on both sides of the generator and of using the collected gas on the low pressure sides for cooling the electric generator, which is required for the efficiency of the system. Nevertheless this design does not provide the sufficient characteristics and means for producing an expansion in series with a high pressure ratio nor for handling a fluid with a high temperature requiring a demand for additional cooling.

Document WO 01/75273 describes a system with a dual hermetic scroll device with a coaxial motor/generator which may integrate a cooling system in order to meet additional demands for cooling. These dual scroll devices are coupled with an admission gas throttle and may be actuated over a wide load range with modulation of the cooling capacity. Nevertheless, this document presents a system with many limitations in terms of possible efficiency, temperature, pressure ratio and rotational speed. Consequently, for example, during operation of two pairs of scrolls at a high temperature, cooling the generator will enhance the differential temperature between the front and rear contact surfaces of the orbiting scrolls, which will have the effect of increasing heat losses and pressure leaks due to deformations and therefore the result of substantially reducing the efficiency of the device. Also, both pairs of scrolls are not suitable for expansion or compression with two serial stages, they should only be actuated in a parallel operating mode with a same operating fluid and with a limited pressure ratio owing to the fact that the low pressure peripheral ports of the orbiting scrolls directly communicate with the ports of the casing (housing) via the interior volume of the casing. Further, the use of a gas throttle for maintaining a specific rotational speed contributes to destroying the pressure for a wide range of working conditions and is therefore not effective for modulating the cooling capacity.

Moreover, other systems are known in the prior art which are applied to recovering heat or to jointly generate electricity and heat and which prove to be difficult to reconcile with the goals of the present invention, and are provided here as an indication. Thus document FR 2 853 016 relates to a system for using lost heat by means of the use of an organic Rankine cycle for recovering heat from an internal combustion engine for vehicles. Nevertheless, the use of scroll devices for applying a heat recovery system is not provided in such a system.

Document WO 02/090747 concerns a power generation system comprising a prime mover subsystem and a subsystem for using thermal energy in a Rankine cycle. The subsystem for using thermal energy may comprise a hermetically sealed volute device which may expand the thermal dynamic fluid in a configuration of pairs of single or dual volutes. This system has the same drawbacks as in WO 01/75273 mentioned earlier. Further, this system does not provide any means for thermally insulating the volutes or any protection against thermal deformations.

Reference may further be made to certain documents mentioning the use in pumps with a scroll device. First of all, document DE 199 53 690 concerns a scroll device with a compressor stage and another expander stage integrated into a system used in a closed loop or in an open Brayton cycle for fuel cells, the system comprising a pump for humidifying an air conduit and lubricating the compressor, external to the scroll device. It will be noted that the scroll device used has the same drawbacks as in document WO 01/75273 described earlier. Documents WO 01/75273 or EP 1 253 323 concern a scroll device using a lubrication pump used for generating a pressure difference in order to transport a lubricant to different mobile portions of the machine.

Finally, document JP 2004 332556 concerns a one- or two-stage scroll device used as a vacuum pump or compressor. Consequently, none of these applications is intended to provide a scroll device comprising an expander stage, a motor and using a pump for supplying the operating fluid.

### SUMMARY OF THE INVENTION

1. The main object of the present invention is to overcome the aforementioned drawbacks. For this purpose, a first aspect of the present invention concerns a scroll device comprising two coupled stages on a rotary shaft, at both ends of an intermediate electrical power device, wherein the first stage is formed by a first pressure variation device of an operating fluid, comprising a scroll case containing a fixed scroll and a mobile scroll relatively to the case, and with admission and outlet ports, and
   **characterized in that** the second stage is a feed pump which pumps the operating liquid (refrigerant) and provides it in return. Such a device is advantageous because the operating conditions of a scroll turbine and of a feed pump are of the same order and thus by a suitable selection of the capacities of these machines (that of the pressure variation stage and that of the pump stage) they may be coupled on a same shaft, while providing optimum efficiency of each of these machines. This configuration is further much less complex than a configuration with coupling through a transmission chain and a shaft seal or as compared with the use of two separate entities, one having a generator and the other an electric motor. The proposed simplified device according to this aspect of the invention also allows simplification of the control system and of the hydraulic and electric connections. It will further be noted that all the moving parts able to generate power (pump, turbine and electricity generator) may be contained in a hermetic enclosure without any shaft seal. Thus the problems of using inflammable, toxic fluids or harmful for the environment are focused on a single machine, the enclosure of which should be guaranteed to be hermetic, without any shaft seal between the enclosure containing the fluid and the outside.

Advantageously, the device is organized in a Rankine cycle comprising an evaporator or (a vapor generator of an operating fluid) and a condenser of the same fluid. The vapor generator then provides the first stage with pressurized vapor flow, which is expanded and then transmitted to the condenser feeding the pump which pumps the liquid at the initial pressure and provides it in return to the vapor generator. This type of device can be particularly used for automotive applications (for instance exhaust heat power regeneration) or for the combined production of electricity and heat or further for recovering heat from waste. Preferably, the pressure variation device is according to the first aspect.

Another aspect of the invention concerns a device for varying the pressure of a fluid, comprising a scroll case containing a fixed scroll and a mobile scroll relatively to the case, and with admission and outlet ports for the fluids, **characterized in that** it comprises means for thermally insulating the scrolls. These thermal insulation means provide reduction of the clearances and pressure losses in the device and therefore a reduction in the energy losses of the fluid during its expansion, the thermal insulation means being applied around the expansion chambers.

According to an advantageous embodiment, the thermal insulation means are provided between the fixed scroll and the corresponding scroll case. According to another advantageous embodiment, the thermal insulation means are provided between the mobile scroll and the orbiting bearing of the device. According to another advantageous embodiment, the thermal insulation means comprise a separation disk placed at the bottom of the orbiting bearing which separates the mobile scroll from the rotating bearing by an insulation space. Alternatively, the thermal insulation means may comprise an insulating material placed between the orbiting bearing and the mobile scroll.

According to another advantageous embodiment, means for preventing thermal deformations of the scrolls are provided. These means for preventing thermal deformations are preferably formed by an expansion ring introducing a local force which deforms the mobile scroll of the corresponding stage in the direction opposite to its normal deformation direction.

According to a third aspect, the present invention concerns a scroll device including two coupled stages on a rotary shaft, at both ends of an intermediate electric power device, wherein the first stage is formed by a first pressure variation device according to the first aspect, characterized in that the second stage is formed by a second pressure variation device with second admission and outlet ports decoupled from the admission and outlet ports of the first pressure variation device, respectively. Such a scroll device ensures operating independence of both stages and thereby provides larger flexibility in terms of operating fluids, of connection between the stages and the electric power device and between the stages themselves. Preferably the second pressure variation device is also a pressure variation device according to the first aspect.

According to an advantageous embodiment, the stage is fixed in a scroll case and a transmission system is fixed in a transmission case and thermal insulation means are provided between the stage and the transmission system, in the form of an insulation plate placed between the scroll case and the transmission case.

According to an advantageous embodiment, the second pressure variation device is connected in a series configuration to the first stage so that one of the two stages operates at a higher pressure than the other one. Thus, with such device, it is possible to expand or compress an operating fluid with an extremely high pressure ratio. Advantageously, both pressure variation devices are expanders so that the first stage operates at a high pressure of a fluid and the second stage operates at a low pressure of the same fluid. Thus, during the expansion process, the high pressure gas of the fluid flows through the inlet port into the open chamber of the scrolls of the high pressure stage, is expanded and delivered by the outlet port at an intermediate or medium pressure. After being collected, the half-pressurized gas is introduced into the inlet port of the low pressure stage and is discharged through the outlet port of this same stage after the second expansion at a lower pressure.

According to another advantageous embodiment, the second stage is connected to the first stage, in a parallel configuration, so that the two pressure variation devices are independent of each other. With such a device it is possible to treat a high capacity, both stages being independently operated with different operating fluids. In this case, one stage operates with an operating fluid whereas the other stage operates with another operating fluid under different conditions.

According to an advantageous embodiment according to either one of the aspects shown above, the intermediate electric power device comprises a rotor and a stator, both being separated by a hermetic sleeve. Indeed, for environmental reasons, provision is made for a device which is hermetically sealed by means of a hermetic sleeve between the rotor and the stator of the motor/generator and preferably with a different casing for each of the transmission cases of the scroll stages, which provides more flexibility in selecting operating fluids (water, corrosive refrigerant fluid, and/or inflammable fluids without any leak) as well as for protecting the stator.

According to an advantageous embodiment in accordance with one of the aspects shown above of a scroll device, the second stage is modular, selected from a second pressure variation device, a rotary device or a lid. Such a modular device is capable of operating as an expander or as a compressor for controlling or treating a wide range of fluids (or media) with high temperature and pressure ratios. The device consists of one or two scroll stages (or modules) which are directly coupled with a shaft at both ends of a simple electric motor or generator. In the two-stage configuration, both modules may be connected in a parallel operating mode according the required capacity and volume or in a series mode in order to operate at low and high pressures. The fluid may either be treated or not between both stages. In the one-stage configuration, one end of the motor/generator is connected to an auxiliary pump device or sealed off by a lid.

According to another aspect, the present invention relates to the use of a scroll device in a series configuration or an expander-pump configuration, in a hybrid motor vehicle for producing electricity by recovering heat from thermal waste (exhaust gases and/or from the engine block) of the vehicle.

According to another aspect, the present invention relates to the use of a scroll device in a series configuration or expander-pump configuration, for the combined production of electricity and heat by making use of the value of fossil or renewable energies or further recovering heat from thermal waste in industry.

### BRIEF DESCRIPTION OF THE DRAWINGS

Other characteristics and advantages of the present invention will become more clearly apparent upon reading the detailed description which follows of the embodiments of the invention given as examples which are by no means limiting, and illustrated by the appended drawings, wherein:
- Fig. 1 illustrates a pressure variation device according to a preferred embodiment;
- Fig. 2 illustrates a pair of fixed and mobile scrolls;
- Fig. 3 illustrates the mobile scroll fittings according to a preferred embodiment;
- Fig. 4 illustrates a sectional view of the mobile scroll fittings;
- Fig. 5 illustrates a widened sectional view of the mobile scroll fittings according to another alternative embodiment;
- Fig. 6 illustrates a scroll device with two high pressure ratio expander stages;
- Fig. 7 illustrates the radial positioning system of a scroll stage according to a preferred embodiment;
- Fig. 8 illustrates the anti-rotation system of a scroll stage according to a preferred embodiment;
- Fig. 9 illustrates the generator positioned between both stages.
- Fig. 10 illustrates a scroll device with an expander stage and a stage equipped with a pump device.

### DETAILED DESCRIPTION OF THE INVENTION

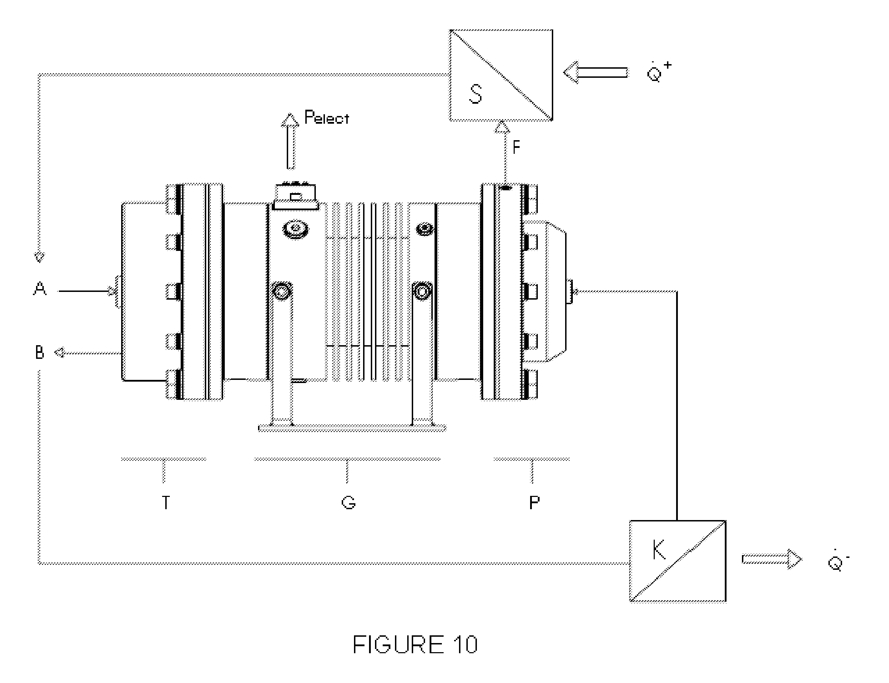

In the following description of the scroll device according to the present invention, for reasons of convenience, reference will primarily be made to a configuration with one or two expander stages, except for Fig. 10, wherein the second stage comprises a feed pump. However, it is clear that each stage of the scroll device which represents a scroll module may operate either as an expander or as a compressor. It will also be understood that it is possible to have a configuration with a single stage possibly coupled with an electric device, the module alone being able to be used as an expander or a compressor. For this purpose, it will be further noted that the second stage is preferably modular, i.e. interchangeable, so as to allow a modification of the operation of the device. However, alternatively, the second stage may be integral with the remainder of the device, i.e. non-modular.

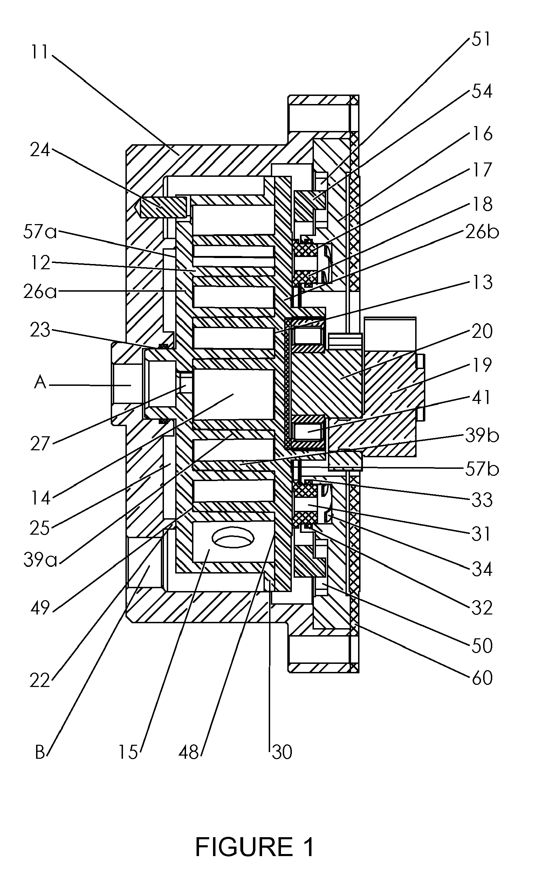

The present description will now be provided as non-limiting examples in connection with Figs. 1 to 10.

Fig. 1 illustrates a pressure variation device as a scroll device which may be considered as a stage, here an expander stage. The expander stage is delimited by a scroll case 11. It contains a pair of scrolls 12, 13 by which the gas (coolant) is expanded. The high pressure gas is introduced through the admission A into an open admission chamber 14 in the pair of scrolls. By the orbiting movement of the mobile scroll 13 with respect to the fixed scroll 12, the volume of the chamber increases and provides the gas at a lower pressure in the discharge volume or chamber 15 after its pressure energy has been used for displacing the mobile scroll. The contact between the mobile scroll and the fixed scroll is maintained by the axial positioning system consisting of an axial bearing disk or plate 16 and of axial bearing segments 17, 18, on the one hand, and by the radial positioning system for example consisting of a crankshaft 19 and of a connecting rod 20 on the other hand. The movement of the mobile scroll is maintained in translation by an anti-rotation system primarily consisting of an Oldham ring 54.

The fixed scroll 12 is attached to the scroll case 11 in the axial direction by a rear ring 22, in the radial direction by the rear housing 23 and in the angular direction by a positioning pin 24 positioned in the scroll case 11 and the fixed scroll 12. A portion of the rear surface 57a of the fixed scroll is not in contact with the scroll case 11 and forms a useful space 25 in terms of thermal insulation between both parts. The fixed scroll 12 and the mobile scroll 13 have a size similar to that of the basic disks 26a, 26b respectively. Their similar geometries provide the condition for similar deformations and are used in order to reduce the clearances between both of these parts. The basic disk 26a of the fixed scroll has an admission port 27 through which the high pressure gas flows into the central open volume of the scroll, i.e. the open admission chamber 14.

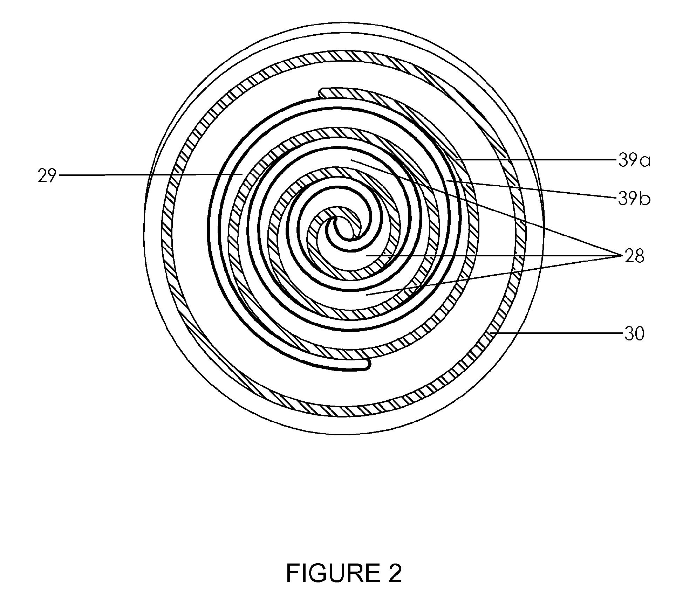

Each of the scrolls 12, 13 respectively, therefore consists of a basic disk 26a, 26b respectively, and of a scroll involute 39a, respectively 39b. As this is illustrated as a section in Fig. 2, a scroll involute 39a combined with its counter-scroll 39b form chambers with increasing sizes 28. The movement of the mobile scroll relatively to the fixed scroll implies that the gas moves in the chambers 28, increasing their volume by a factor defined as an installed volume ratio (VRi) until the peripheral chamber 29 is opened to the discharge chamber 15 of the scroll case 11. Considering again Fig. 1, the fixed scroll 12 has a peripheral contact ring 30 on which the basic disk 26b of the mobile scroll 13 slides during rotation. This prevents the mobile scroll 13 from tilting over because of the radial torque of the resulting forces exerted on the mobile scroll.

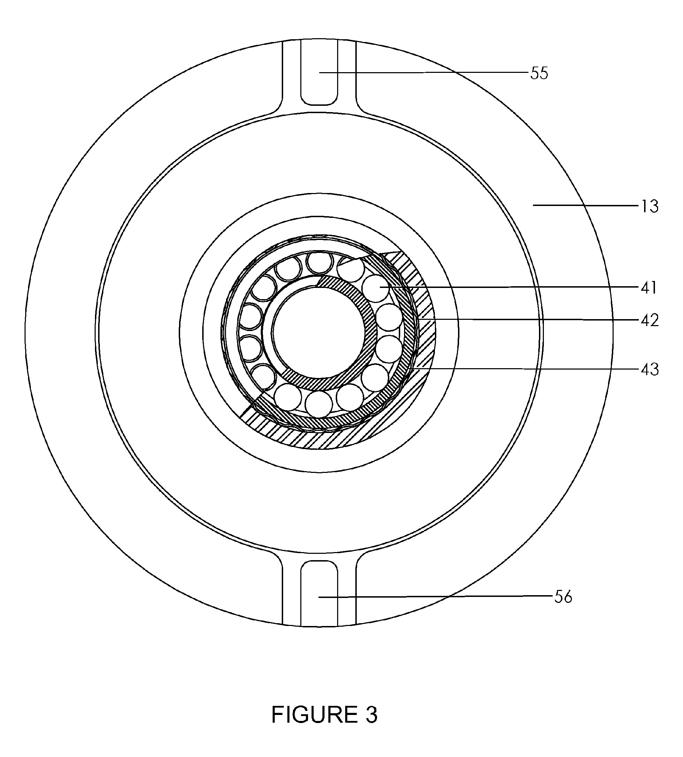

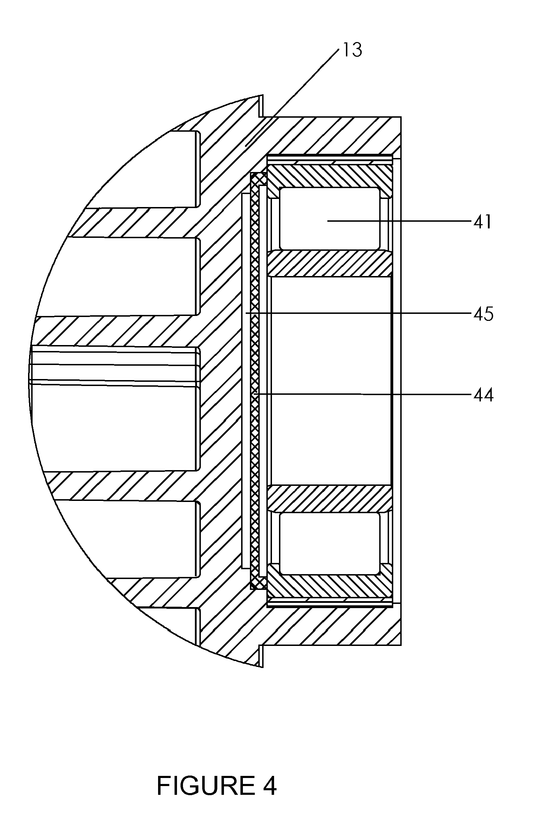

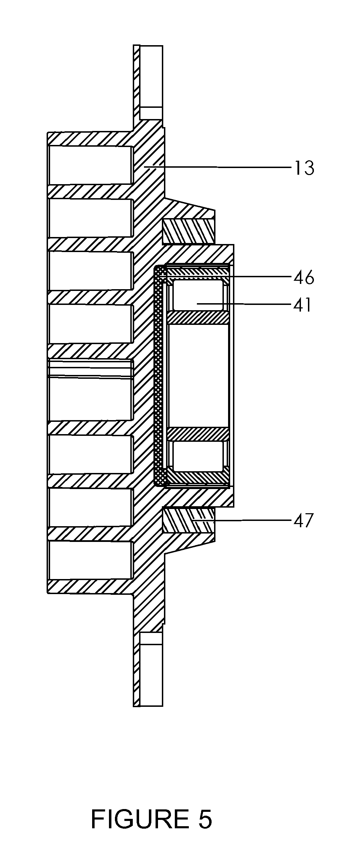

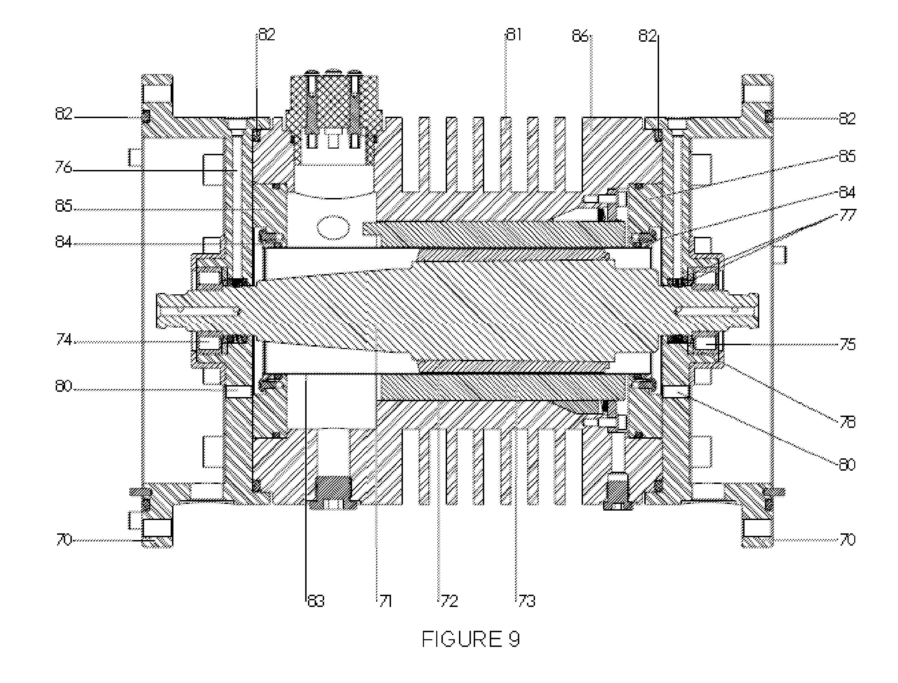

Fig. 3 illustrates the fittings of the mobile scroll 13 which drive the radial positioning system into the direction of rotation by means of an orbiting bearing 41. The interface between the mobile scroll and the orbiting bearing is subject to thermal and mechanical deformations. In order to reduce these thermal deformations, detrimental to the efficiency of the device, it was noticed that high temperature conditions promote heat exchanges with the coldest portions. It is therefore important to control heat transfer in order to avoid losses, but also to reduce thermal gradients in the parts which have significant geometrical tolerances, and more particularly here the volutes, i.e. the scrolls. Hence, the latter need to be particularly well heat-insulated. To this end, several ingenuities are advantageously provided. For example:
i) Provision is made for separating the fixed volute 12 from the main case 11 and for having two volutes 12 and 13 in the same geometric conditions and formed in identical materials so that the deformations are similar.
ii) Provision may be made for a tolerance ring 42, consisting of a bushing with a flexible radial thickness obtained by means of structure layers (for example flexible 3-dimensional swirls or strips) with a very small sectional surface, this ring being placed between the housing of the orbiting volute and the outer diameter of the orbiting bearing 41. Spaces 43 are filled with air, gas vapor or low heat conductivity liquid, between the structured layers of the tolerance ring 42 and the outer diameter of the orbiting bearing 41 and between the layers and the inner surface of the housing of the mobile scroll. These spaces provide heat insulation between the mobile scroll and the orbiting bearing. The flexibility of the tolerance ring 42 is used in order to maintain contact and transmit radial forces between the mobile scroll 13 and the orbiting bearing 41, to the extent that their differences in temperature and material properties cause their contact surfaces to expand according to various sizes.
iii) Provision may further be made, as illustrated in Fig. 4, for a thin separation component, for example as a separation disk 44 which may be placed at the bottom of the orbiting bearing 41 which separates the mobile scroll 13 from the rotating bearing by a space 45 filled with air, gas, vapor or low heat conductivity liquid, such as lubricating oil, by which heat transfer may be reduced from the mobile scroll 13 right up to the orbiting bearing 41.
iv) As an alternative, as illustrated in Fig. 5, the equivalent effect may be obtained by means of a disk filled with an insulating material 46 by which heat transfer may be reduced from the mobile scroll 13 right up to the orbiting bearing 41.
v) Thermal insulation between the parts of the scroll stages and the transmission system is provided by an insulating disk or a plate for insulating the scrolls, 60 (Fig. 1) placed between the scroll case and the transmission case 70 (Fig. 9). In order to reduce heat transfer from the expansion chambers to the transmission case as much as possible, the plate for insulating the scrolls (i.e. an insulating disk) extends from the outer diameter of the cases to the internal mobile parts. According to this alternative embodiment, the outer diameter of the insulating disk is of the same size as the outer diameter of the cases; thus, there is no direct contact between the cases. Centering screws and pins are used in order to maintain these three components blocked. According to another alternative embodiment, the insulating disk has a reduced diameter and the positioning of the scroll case is directly fixed to the contact of the transmission case.
vi) Thermal insulation between the expansion stage and ambient air is provided by positioning any kind of insulating material around the external envelope of the scroll and the transmission cases which has the effect of reducing thermal losses detrimental to the performances of the expander and to the heat cycle.

Whatever the alternative considered among those shown in Figs. 3, 4 and 5, again considering Fig. 1, the front contact surface 48 and the crest surface 49 of the mobile scroll 13, as well as the rear contact surface 57b between the mobile scroll 13 and the axial bearing 16 need to remain as flat as possible in order to reduce the clearances and pressure losses. Another means for reducing these deformations, apart from those shown earlier, consists of predicting the main deformations and compensating them by thermal expansion devices which deform in a way opposite to the scroll. Such an optional device, illustrated in Fig. 5, for example comprises a thermal expansion ring 47. Thus, while the temperature rises, the ring 47 with a lower thermal heat conduction expands more than the mobile scroll 13 and introduces a local force which deforms this scroll in the direction opposite to the normal deformation direction due to the heat transfer in the axial direction.

It will also be noted that it is possible to use the fluid for lubricating the volutes for transferring heat to the operating fluid being processed. The reduction in the temperature difference is a function of the oil concentration, which contributes to reducing thermal deformations advantageously.

Such a scroll device comprising one or more of these ingenuities enables the use of a high temperature fluid and a reduction of the thermal losses and clearances when the electric device (a motor or generator) is cooled ensuring efficient operation of the device.

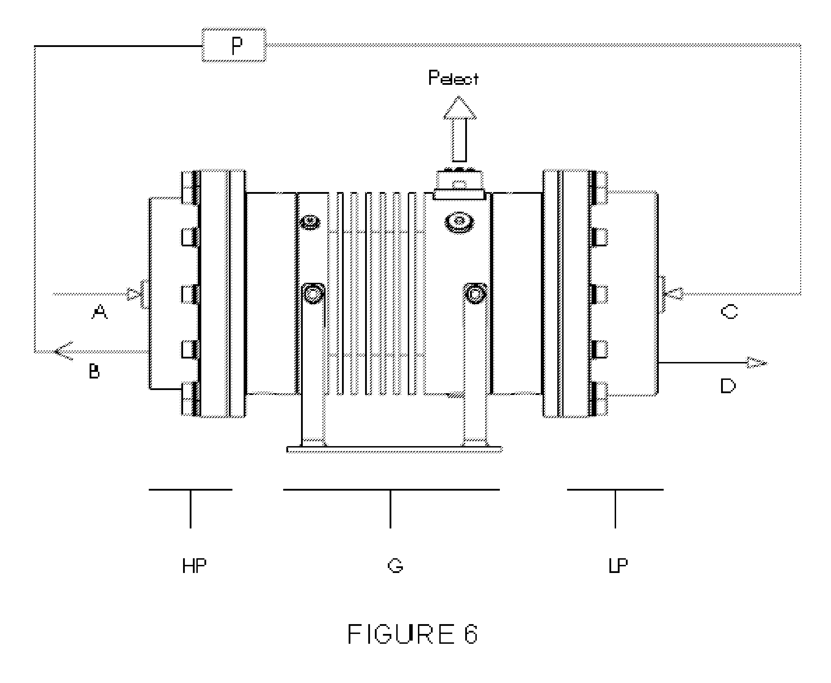

Considering Fig. 6, a scroll device with two high pressure ratio expander stages is illustrated. The components of the scroll device are described in a configuration involving two expander stages coupled with a simple generator G placed in the middle forming a high pressure ratio expander. A first HP stage of the expander operates at a high pressure level and the second LP stage of the expander operates at a low pressure level. In this example, the stages of the expander are directly coupled with the shaft of the generator. The high pressure gas enters the HP stage of the expander through the admission A and exits through the outlet B as visible in Fig. 6. Next, the gas may either be treated or not through an optional treatment device P before it enters the LP stage of the expander through the admission C and exits the LP stage through the outlet D. The expansion work of both stages is transmitted to the generator by the movement of the mobile scrolls on each of the expander stages, transformed into a rotary motion by an eccentric mechanism coupled with a shaft common to both stages. In the generator G, the rotor is mounted on the shaft and transforms the mechanical transmission into an electric current through the stator. As a general expression one could refer to a dynamoelectric machine encompassing such generator and motor.

Such a high pressure ratio application is possible thanks to the series configuration of both HP and LP expander stages, including the admission and outlet ports of which A, B, C and D through which the operating fluid travels in this order. It will be noted that in this advantageous embodiment of the present invention, the admission ports A and C are decoupled from each other, and in the same way the outlet ports B and C are also decoupled from each other.

It will further be noted that heat cycles provide better efficiencies at a high pressure ratio (of the order of 10 to 30), whereas conventional turbines or expanders with a volume ratio VRi (2-4) have low efficiencies for this order of pressure ratio magnitude. For a question of cost and bulkiness, the size should also be reduced, or the power density of the turbine should also be increased, it is therefore of interest to operate at a high speed. Thus, the device should be separated into two stages, which provides an installed volume ratio (VRi) greater than 12 and a possibility of operating at speeds between 1,500 and 6,000 rpm. However, in order to reduce the costs of the electronics and parts, the assembling of two turbine stages, i.e. expanders, is carried out on a same generator, which also allows the number of bearings to be also reduced. Within the scope of the present invention, a particularly advantageous VRi distribution selection was revealed so that the dimensions of a stage are not a penalty to the speed of the whole of the device, but on the contrary so that both stages reach the same speed limits. This selection corresponds to stages with similar outer diameters, for this, the VRi of the first stage is selected to be much higher than that of the second stage.

Both expander stages are preferably of identical construction, their description having been given in detail earlier in connection with Fig. 1. An expander stage as illustrated in Fig. 1 is again considered hereafter.

In order to maintain the contact between the mobile scroll and the fixed scroll, an axial positioning system and a radial positioning system are provided, which were briefly discussed earlier and which will now be described in more detail. The axial positioning system, as illustrated in Fig. 1, mainly consists in two ring segments 17, 18, urged against the rear contact surface 57b of the mobile scroll 13, defining between them a chamber 31 which may be pressurized with a fluid originating from the outside or inside. The pressure of the fluid against the rear contact surface 57b provides the axial force on the mobile scroll 13 which maintains it in contact with the fixed scroll 12. The ring segments 17 and 18 are inserted in a ring groove formed in the axial bearing disk 16, with segment gasket seals 32, 33 on the inner and outer sides, allowing the segments to move in the longitudinal direction and to provide axial conformity. The upper surface of the ring segments are preferably formed with a material having good wear resistance. The ring segments 17 and 18 are kept in contact with the rear contact surface 57b by means of the pressure difference on either side of the surface defined by the sealing diameter on the gasket seal and the sealing diameter on the upper surface of the ring segment. Under initial conditions, the contact between the segments 17 and 18 and the rear contact surface 57b is maintained by means of an arrangement of springs 34 of the axial bearing on the ring segments, providing a minimum force in the direction of the mobile scroll 13, sufficient for overcoming static friction between the segment joints 32, 33 and the sides of the ring groove.

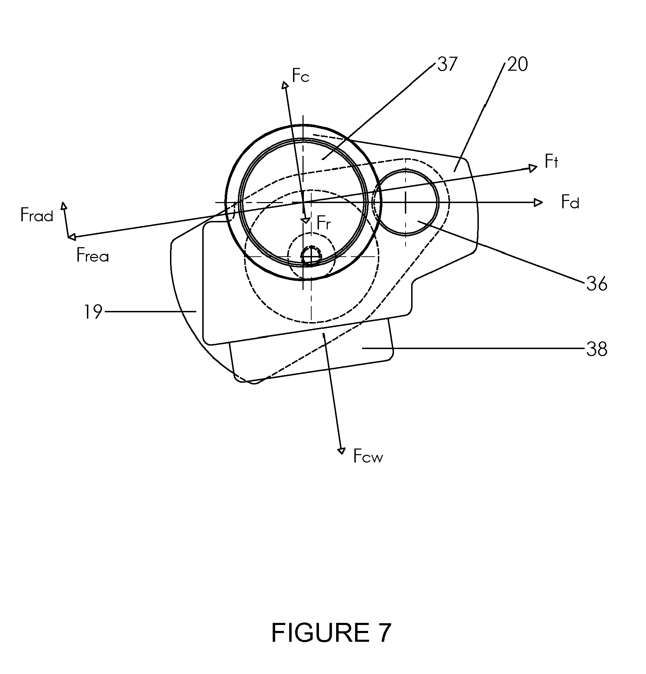

The function of the radial positioning system is to maintain the mobile scroll in radial contact with the fixed scroll, because the pressure in the scroll chambers tends to separate the latter, in order to counterbalance the centrifugal force of the mobile scroll and to transmit the displacement force of the mobile scroll as a torque to the shaft of the generator. There are several ways for providing theses functions. In the preferred configuration illustrated in Fig. 7, the tangential component Ft of the resulting pressure forces FD applied on the orbiting bearing is transferred to a crankshaft 19 by traction or alternatively by compression of a connecting rod 20, pivotably mounted on the crankshaft by the crank pin 36. The connecting rod is affixed to the mobile scroll through the orbiting bearing mounted on the orbiting crank pin 37. The counterweight 38 bound to the connecting rod 20 is designed so as to balance the centrifugal force Fc caused by the orbiting part. The tangential component of the force applied on the crankshaft is transmitted as a torque by the crankshaft attached to the shaft of the generator and is thus transmitted to the generator. The direction of the reaction force Freac of the connecting rod on the orbiting bearing is determined by the angular arrangement of the crankshaft 19 and of the connecting rod 20; from there, appears an outward-directed radial force Frad, related to a given driving force. By properly selecting the angular arrangement, the radial force value may exceed the radial component Fr of the driving force Fd which tends to separate the fixed scroll from the mobile scroll and may thereby provide the radial contact between the scrolls. The arrangement of the crankshaft and of the connecting rod provides a radial positioning system with the required radial conformity.

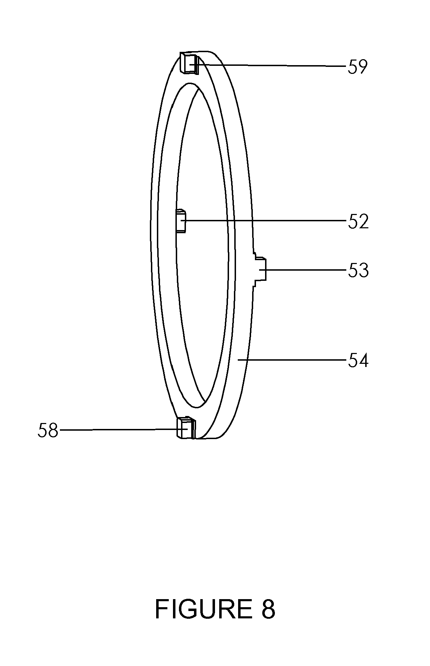

Fig. 8 illustrates the anti-rotation system integrated into a scroll stage as detailed in Fig. 1. The upper surface of the axial bearing disk 16 has two radial grooves 50, 51 (Fig. 1) diametrically opposite to each other and formed in the disc in order to be used as grooves for corresponding keys 52, 53 (Fig. 8) also positioned oppositely and located on one side of the Oldham ring 54. The external rear surface 57b (Fig. 1) of the basic disk of the mobile scroll has similar radial grooves diametrically opposite to each other and which are spaced out by 90° relatively to the grooves 50, 51 of the axial bearing disk 16. These grooves are used as grooves for the corresponding keys 58, 59 (Fig. 8) positioned on the other side of the Oldham ring 54. The purpose of the Oldham ring is to maintain the fixed and mobile scrolls in a predetermined set angular relationship.

Fig. 9 illustrates the generator positioned between both stages of the device of Fig. 6. The shaft 71 of the generator transmits the mechanical torque into a magnetic torque by means of synchronous or asynchronous devices of the rotor 72 and of the stator 73, which subsequently produce electric current, useful for providing an electric network or for storing energy in batteries. The shaft 71 is mounted in the inner ring of two radial bearings 74, 75 attached in the transmission cases 70, on either side of the generator. The expansion volume on each stage is axially insulated from the rear surface of the orbiting scrolls by means of an axial bearing disk and an axial bearing ring. Thus the pressure in the transmission cases is different and independent of the pressure in the volutes, allowing independent stages to operate separately or in a series operating mode, as illustrated in Fig. 1, so as to be able to expand or compress an operating fluid with a very high pressure ratio, or in a parallel operating mode in order to be able to expand or compress one or simultaneously two operating fluids under different conditions.

Lubricating oil is introduced into the shaft through a conduit 76, formed in the transmission cases. Internal shaft seals 77 with low frictional losses and withstanding high temperatures are positioned between the transmission cases and the shaft.

Referring to Fig. 1, lubricating oil is conveyed right up to the orbiting bearing 41 and to the crank pin 36 by means of passages formed in the crankshaft 19 and the connecting rod 20. The lubricating oil is collected at the bottom of the transmission cases 70. An external or internal oil pump delivers the collected oil at a high pressure into the admission of the lubricating system. Additional gasket seals may be placed on the shaft for better medium separation between the fluid used in the high pressure HP stage and the fluid used in the low pressure LP stage, if they differ. The preferred arrangement is to have a single pressure level in both transmission cases and in the generator, in order to have only a single oil pump discharge pressure and no axial force due to the pressure differences on the shaft. The advantageous use of a lubricating circuit at a single pressure instead of two systems with different pressures will be noted here.

Again referring to Fig. 9, equalization holes 80 are provided in the transmission case for the pressure balance between the transmission case 70 and the generator case 86. The stator 73 is mounted in the generator case by radial clamping. The heat produced by the stator is transferred by conduction to the generator case 86 and then evacuated to the ambient air through the external surface 81 with fins of the generator case or towards a forced convection cooling system. The gasket seals 82 are used between the generator case 86 and the transmission cases 70, between the transmission case and the insulating disk of the expander, both between the insulating disk and the scroll case. A hermetic sleeve 83 may advantageously be placed between the rotor 72 and the stator 73 if corrosive fluids are used, in order not to damage the stator. This protection of the stator may be achieved by a glass fiber partition, passing between the rotor and the stator, no shaft seal is used for this. The hermetic sleeve 83 is radially sealed on its ends by means of a radial seal 84 located in a groove of a cylindrical housing 85 either connected to the back of the transmission case 70 or to the inner diameter of the generator case 86. All the gasket seals 82 and 84 may be replaced with welds providing total sealing of the system.

In the alternative modular design of the second stage of the device as shown in Fig. 6, the system may also operate in a configuration with one or two stages. Thus for example, in a single stage configuration, the side of the generator which is not connected to a stage of the expander may be equipped with any rotating device which would need mechanical power, such as a pump stage, as illustrated in Fig. 10, or a compressor stage. It may alternatively be connected to a lid so that the device is converted into a single stage expander.

As mentioned, Fig. 10 illustrates a scroll device with an expander stage and a stage equipped with a rotating device, in particular a pump stage. The expander stage comprises a scroll case containing a fixed scroll and a mobile scroll relatively to the case and with admission and outlet ports for the fluid to be expanded.

It is thus obtained a scroll device comprising two coupled stages T and P on a rotary shaft, at both ends of an intermediate electrical power device G, wherein the first stage is formed by a pressure variation device T (i.e. here an expander) of an operating liquid, comprising a scroll case containing a fixed scroll and a mobile scroll relatively to the case, and with admission A and outlet B ports, and **characterized in that** the second stage is a supply pump P which pumps the operating liquid and provides it in return.

The expander preferably comprises means for thermally insulating the scrolls. These thermal insulation means are advantageously provided between the fixed scroll and the corresponding scroll case. When an orbiting bearing is provided, thermal insulation means may be also provided between the mobile scroll and the orbiting bearing, may comprise a separation disk placed at the bottom of the orbiting bearing which separates the mobile scroll from the rotating bearing by an insulation space and may also comprise an insulating material placed between the orbiting bearing and the mobile scroll. Additionally means for preventing thermal deformations of the scrolls may be provided. These means for preventing thermal deformations are advantageously formed by an expansion ring introducing a local force which deforms the mobile scroll of the corresponding stage in the direction opposite to its normal deformation direction.

As for the scroll devices presented hereinbefore, wherein the intermediate electric power device G comprises a rotor and a stator, a hermetic sleeve may be provided between the rotor and the stator. Further each stage may be confined in a hermetic casing.

Referring back to Fig. 10, the arrangement of a pump P coupled with the turbine T, i.e. the expander stage, and with the generator G is of particular interest when the device is organized in a Rankine cycle for producing electricity, in which all the mobile components are confined in a hermetic casing. By a Rankine cycle, is meant a theoretical thermodynamic cycle used in steam engines including at least four main steps: i) pressurized liquid vaporization; ii) vapor expansion; iii) vapor condensation; iv) pumping liquid again to the initial pressure.

Such a configuration is described in Fig. 10, wherein a vapor generator S provides through the admission port A of the expander T, a pressurized liquid, which is expanded and then transmitted from the outlet port B to a condenser K feeding a pump P pumping the liquid to the initial pressure and providing it to the vapor generator S through an outlet port S.

A two-stage device in a series configuration or in an expander-pump configuration as described in connection with Figs. 6 and 10 respectively is advantageously integrated into an automotive application. Such a device allows electricity to be produced onboard in a hybrid motor vehicle by recovering heat from the waste exhaust gas of the engine.

It is also possible to integrate such a device into an application for combined production of electricity and heat. Preferably such a production of electricity and heat will be obtained by making the most of the value of renewable energies or the value of thermal waste in industry.

It will be understood that various modifications and/or improvements obvious for one skilled in the art may be made to the different embodiments of the invention as described in the present description without departing from the scope of the invention as defined by the appended claims.

## Claims

1. A scroll device including two coupled stages (T, P) on a rotary shaft, at both ends of an intermediate electric power device (G), wherein the first stage is formed by a first pressure variation device (T) of an operating fluid, comprising a scroll case (11) containing a fixed scroll (12) and a mobile scroll (13) relatively to the case, and with admission (A) and outlet (B) ports, and **characterized in that** the second stage is a feed pump (P) which pumps the operating liquid and provides it in return.

2. The scroll device according to claim 1 wherein at least the first stage (T) comprising an orbital bearing (41) and means for thermally insulating the scrolls **characterized in that** these thermally insulating means include the fixed scroll being separated from the scroll case and a tolerance ring (42), consisting of a bushing with a flexible radial thickness, being placed between a housing of the mobile scroll and the outer diameter of the orbital bearing.

3. The scroll device according to claims 1 or 2, **characterized in that** the thermal insulation means (25) are provided by a space between the fixed scroll and the corresponding scroll case.

4. The scroll device according to any of claims 1 to 3, **characterized in that** the thermal insulation means (43) are also provided between the mobile scroll and the orbiting bearing.

5. The scroll device according to any of claims 1 to 4, **characterized in that** the thermal insulation means comprise a separation disk (44) placed at the bottom of the orbiting bearing which separates the mobile scroll from the rotating bearing by an insulation space (45).

6. The scroll device according to any of claims 1 to 5, **characterized in that** the thermal insulating means comprise an insulating material (46) placed between the orbiting bearing and the mobile scroll.

7. The scroll device according to any of claims 1 to 5, **characterized in that** means for preventing thermal deformations of the scrolls are provided.

8. The scroll device according to claim 6, **characterized in that** the means for preventing thermal deformations are formed by an expansion ring (47) introducing a local force which deforms the mobile scroll in the direction opposite to its normal deformation direction.

9. The scroll device according to any of claims 1 to 8, wherein the first stage is attached in a scroll case (11) and a transmission system (74) is attached in a transmission case (70), **characterized in that** thermal insulation means are provided between the stage and the transmission system, in the form of an insulation plate (60) placed between the scroll case and the transmission case.

10. The scroll device according to any of claims 1 to 9, wherein the intermediate electric power device (G) comprises a rotor (72) and a stator (73), **characterized in that** a hermetic sleeve (83) is provided between the rotor and the stator

11. The use of an apparatus according to any of claims 1 to 10, in a hybrid motor vehicle for producing electricity by recovering heat from waste exhaust gas of the engine of the vehicle.

12. The use of an apparatus according to any of claims 1 to 10, for combined production of electricity and heat.
